# EUROPÄISCHE PATENTSCHRIFT

(11) **EP 1 640 128 B1**
(45) Veröffentlichungstag und Bekanntmachung des Hinweises auf die Patenterteilung: **07.11.2007**
(21) Anmeldenummer: 05020923.8
(22) Anmeldetag: 26.09.2005
(51) Int. Cl.: B27D 5/00, B29C 63/00

(54) **Verfahren zum Anleimen von Kantenmaterial an Leichtbauplatten**
Method for glueing rims to lightweight panels
Procédé de collage de bordures sur des panneaux légers

(30) Priorität: 27.09.2004 DE 102004046849
(43) Veröffentlichungstag der Anmeldung: 29.03.2006
(73) Patentinhaber: Homag Holzbearbeitungssysteme AG, 72296 Schopfloch (DE)
(72) Erfinder: Gauss, Achim, 72280 Dornstetten/Hallwangen (DE); Schmid, Johannes, 72181 Starzach/Wachendorf (DE)
(74) Vertreter: HOFFMANN EITLE

(56) Entgegenhaltungen:
- EP-A- 1 186 398
- DE-A1- 19 955 575
- DE-U1- 9 107 431
- FR-A- 1 530 769

## Beschreibung

Die vorliegende Erfindung betrifft ein Verfahren zum Anleimen von Kantenmaterial auf Leichtbauplatten, wobei mindestens eine Schmalseite der jeweiligen Leichtbauplatte zur Vorbereitung des Anleimvorganges bearbeitet und im Anschluss daran eine Stützkante und eine Dekorkante aufgebracht werden.

Leichtbauplatten der hier zur Diskussion stehenden Bauart bestehen aus zwei die Plattenober- sowie die Plattenunterseite bildenden dünnwandigen Decklagen und mindestens einer zwischen den Decklagen angeordneten und mit diesen verklebten Kernlage aus leichtem Füllmaterial (siehe z.B. EP-A-1 186 398).

Derartige Leichtbauplatten werden zur Herstellung von Zimmertüren, Möbelelementen, Paneelelementen o.dgl. eingesetzt. Die dünnwandigen Decklagen bestehen dabei meist aus einer Furnier-, Kunststoff- oder Metallplattenlage geringer Wandstärke, die jeweils auf die Außenseite der Kernlage aufgeklebt wird. Als Kernlage wird eine Füllmateriallage verstanden, die weitgehend aus Stegen besteht, die untereinander verbunden sind und Hohlräume verschiedenster Form einschließen. Bevorzugt sind dabei waben- oder rohrartigen Strukturen, die einerseits in Verbindung mit den Decklagen zusätzliche Festigkeit verleihen, andererseits - bezogen auf das Volumen - ein extrem niedriges Gewicht besitzen.

Unter einer Schmalseite wird im vorliegenden Fall jeweils derjenige Bereich verstanden, der die Ränder bzw. die Randbereiche einer derartigen Leichtbauplatte definiert. Die "weiche" Kernlage ist von den Rändern bzw. Randbereichen her zugänglich und muss daher geschützt und auch aus Designgründen abgedeckt werden. Zu diesem Zweck ist es bekannt (vgl. Zeitschrift BM 9/2004, Seiten 48 und 49) zunächst die Ränder bzw. Randbereiche auszufräsen, in die in dieser Weise gebildeten Nut eine sogenannte Stützkante einzuleimen und diese dann - gegebenenfalls nach einer weiteren Bearbeitung - mit einer Dekorkante auszustatten, die ebenfalls aufgeleimt wird.

Es ist auch bekannt, an Stelle der Stützkante einen Untergrund durch Hinterschäumen zu schaffen und auf diesen - gegebenenfalls ebenfalls nach einer weiteren Bearbeitung - die Dekorkante unmittelbar aufzuleimen.

Derartige Verfahren sind sehr aufwändig und erfordern eine Vielzahl von Arbeitsgängen, die sich insbesondere bei Durchlaufverfahren nur mit großem verfahrens- und vorrichtungstechnischen Aufwand realisieren lassen.

Aufgabe der vorliegenden Erfindung ist es daher, ein Verfahren bereit zu stellen, das eine vereinfachte Herstellung, insbesondere im Durchlauf ermöglicht.

Diese Aufgabe wird erfindungsgemäß dadurch gelöst, dass zunächst die Dekorkante und die Stützkante miteinander verleimt und im Anschluss daran beide Kanten gemeinsam auf die vorbereitete Schmalseite der Leichtbauplatte aufgeleimt werden.

Die erfindungsgemäße Verfahrensweise eignet sich insbesondere zum Einsatz im Durchlauf. Dabei wird zunächst die Bearbeitung zur Vorbereitung des Arbeitsvorganges vorgenommen und im Anschluss daran oder parallel hierzu in einem separaten Arbeitsgang die Stützkante und die Dekorkante miteinander verleimt. Danach werden beide Kanten gemeinsam der vorbereiteten Schmalseite zugeführt und mit dieser durch Verleimen verbunden.

Als Kantenmaterial wird dabei jegliches Material verstanden, das leisten- oder streifenartig ausgebildet ist und der vorbereiteten Schmalseite in einem spitzen Winkel, insbesondere im Durchlauf zugeführt werden kann.

Als Kleber für den Anleimvorgang können die üblichen PVA-, PUR-, bzw. PO-Kleber eingesetzt werden. Als Material für die Kanten können Holz, Holzwerkstoffe, Kunststoffe oder auch Verbund- oder Metallwerkstoffe eingesetzt werden.

Ein besonderer Vorteil ist darin zu sehen, dass durch das gleichzeitige und gemeinsame Zuführen der Stütz- und Dekorkante auf die vorbereitete Schmalseite der hierfür erforderliche maschinentechnische Aufwand wesentlich kompakter und damit kostengünstiger gestaltet werden kann.

Das Aufbringen des Klebers für den Anleimvorgang kann in verschiedenster Weise durch Walzen-, Sprüh- oder dergleichen Auftragvorrichtungen erfolgen.

Im Folgenden sind zum besseren Verständnis und zur weiteren Erläuterung der Erfindung die Hauptverfahrensschritte unter Bezugnahme auf die beigefügten Figuren kurz beschrieben.
- Figuren 1 - 4: zeigen schematisch den Randbereich einer Leichtbauplatte in vier verschiedenen Phasen des Verfahrens.
- Figuren 5 - 7: zeigen ebenfalls schematisch den wesentlichen Verfahrensschritt, der auf die in Figur 3 dargestellte Phase folgt und zu dem in Figur 4 dargestellten Ergebnis führt.

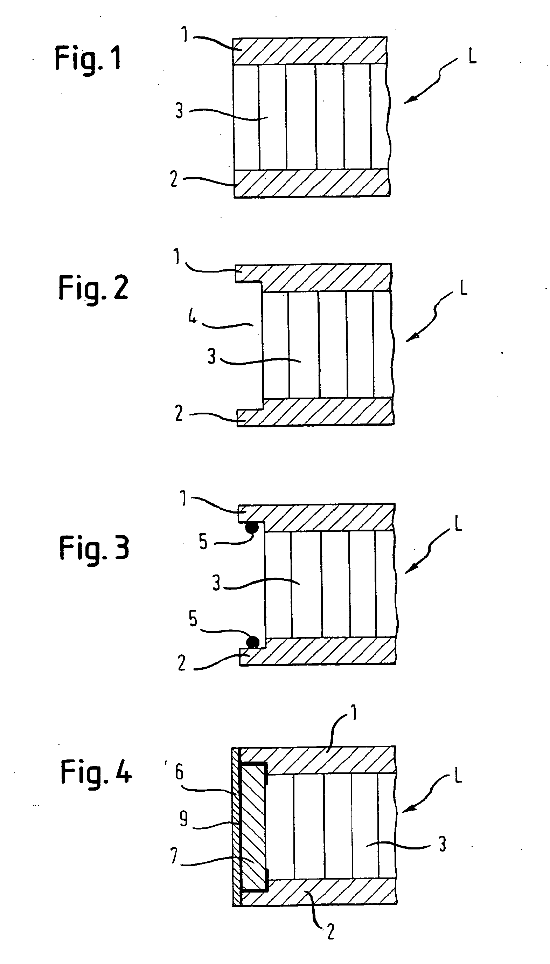

Wie die Figuren 1 - 4 zeigen, besteht eine Leichtbauplatte L aus die Plattenoberseite 1 und die Plattenunterseite 2 bildenden dünnwandigen Decklagen und einer zwischen den Decklagen angeordneten und mit diesen verklebten Kernlage 3 aus leichtem Füllmaterial.

Zur Vorbereitung des Anleimvorganges wird die Leichtbauplatte L im Bereich ihrer Schmalseite in einem ersten Verfahrensschritt bearbeitet. Diese Bearbeitung kann in verschiedenster Weise erfolgen. Bei dem in Figur 2 dargestellten Ausführungsbeispiel wird in die Schmalseite eine Nut 4 eingefräst.

Wie Figur 3 zeigt, erfolgt in einem daran anschließenden Verfahrensschritt im Bereich der Nut 4 ein Leimauftrag, wie dies schematisch in Figur 3 durch Leimraupen 5 angedeutet ist.

Im Anschluss daran wird in die mit einem Leimauftrag versehene Nut 4 eine bereits in einem vorgeschalteten oder parallelen Arbeitsgang mit einer Dekorkante 6 ausgestattete Stützkante 7 eingesenkt, wie dies in Figur 4 schematisch dargestellt ist.

In Abweichung von dem in Figur 3 angedeuteten Verfahrensschritt kann der Leimauftrag selbstverständlich auch auf die Stützkante 7 direkt und auf die überstehenden Ränder der Dekorkante 6 erfolgen, bevor die Stützkante und die Dekorkante in die Nut 4 eingesenkt werden.

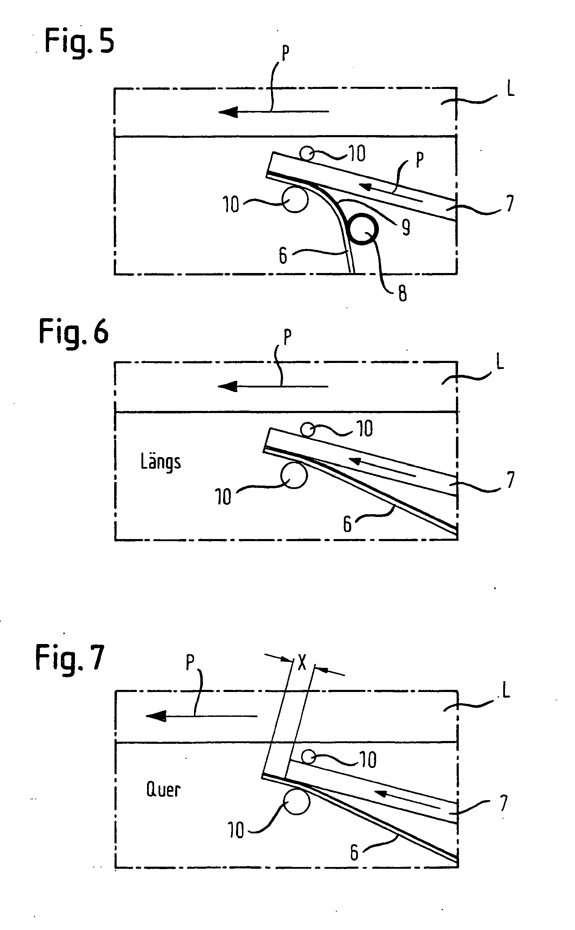

Erfindungswesentlich ist im vorliegenden Fall, dass die Stützkante und die Dekorkante vor dem Anbringen auf die vorbereitete Schmalseite der Leichtbauplatte miteinander verleimt werden, wie dies in Figur 5 schematisch dargestellt ist. In diesem Ausführungsbeispiel wird die Dekorkante 6 vor dem Zusammenführen mit der Stützkante 7 über eine Leimwalze 8 geführt und auf diese Weise auf einer Seite mit einer Leimschicht 9 versehen. Die in dieser Weise vorbereitete Dekorkante 6 wird dann der Stützkante 7 zugeführt. Im Anschluss daran erfolgt eine Verbindung der Stützkante 7 mit der Dekorkante 6, die in dem in den Figuren 5 - 7 dargestellten Ausführungsbeispiel über ein Hindurchführen der beiden Kanten zwischen Presswalzen 10 schematisch angedeutet ist. Die mit der Stützkante 7 verleimte Dekorkante 6 wird dann in die Nut 4 der Leichtbauplatte L eingeführt und mit dieser verbunden, wie dies bereits in Figur 4 im Endzustand schematisch dargestellt ist.

Selbstverständlich kann die Leimschicht zwischen der Dekorkante 6 und der Stützkante 7 auch mit einem geeigneten anderen Verfahren erfolgen.

Das Einsenken der mit der Stützkante 7 verleimten Dekorkante 6 in die Nut 4 der Leichtbauplatte L erfolgt in dem in den Figuren 5 - 7 dargestellten Ausführungsbeispiel im Durchlauf. Dies ist durch Pfeile P in den Figuren angedeutet. Selbstverständlich kann das Zuführen der mit der Dekorkante 6 versehenen Stützkante 7 auch auf andere Weise, beispielsweise mittels eines entsprechend ausgestalteten Bearbeitungszentrums erfolgen.

Zur Herstellung von Zimmertüren, Möbelelementen oder Paneelelementen werden in der Regel Leichtbauplatten eingesetzt, die zwei in Längsrichtung verlaufende sowie zwei in Querrichtung verlaufende Schmalseiten aufweisen. Um sicherzustellen, dass die Dekorkante das jeweilige Werkstück lückenlos umspannt, ist es erforderlich, die jeweilige Stärke der Stützkante 7 zu berücksichtigen. Vorzugsweise werden daher bei der Herstellung der Längsseite die Stützkante 7 und die Dekorkante 6 in der gleichen Länge miteinander verleimt und nach dem Einsenken in die Nut 4 über herkömmliche Kappaggregate bündig abgetrennt.

Um eine vollständige Überdeckung im Eckbereich sicherzustellen, ist es allerdings erforderlich, beim Anleimen der beiden Kanten an der querverlaufenden Schmalseite die Dekorkante 6 mit einem Überstand X auf die Stützkante 7 aufzuleimen. Dieser Überstand deckt dann nach dem Einsenken in die Nut 4 im Eckbereich die Stirnfläche des im vorangegangenen Arbeitsganges eingesetzten Kantenmaterials ab.

## Patentansprüche

1. Verfahren zum Anleimen von Kantenmaterial an Leichtbauplatten die zwei dünnwandige Decklagen (1,2) und eine zwischen den Decklagen angeordnete Kernlage (3) aus leichtem Füllmaterial aufweisen, wobei mindestens eine Schmalseite der Leichtbauplatte zur Vorbereitung des Anleimvorganges bearbeitet und im Anschluss daran eine Stützkante (7) und eine Dekorkante (6) aufgebracht werden, wobei die Kernlage bezogen auf das Volumen ein geringues Gewicht besitzt als die Stützkante,
**dadurch gekennzeichnet, dass**
zunächst die Dekorkante und die Stützkante miteinander verleimt und im Anschluss daran beide Kanten gemeinsam auf die vorbereitete Schmalseite der Leichtbauplatte (L) aufgeleimt werden.

2. Verfahren nach Anspruch 1,
**dadurch gekennzeichnet, dass**
im Durchlauf zuerst die Bearbeitung zur Vorbereitung des Anleimvorganges vorgenommen wird, im Anschluss daran oder parallel hierzu die Stützkante (7) und die Dekorkante (6) durch Verleimen miteinander verbunden und danach beide Kanten gemeinsam auf die vorbereitete Schmalseite aufgebracht werden.

## Claims

1. Method for gluing edge material to lightweight building boards, having two thin-walled covering layers (1, 2) and a core layer (3), made of light filling material and arranged between the covering layers, wherein at least one narrow side of the lightweight building board is machined in preparation for the gluing process and following this a supporting edge (7) and a decorative edge (6) are attached, the core layer having a lesser weight, related to the volume, than the supporting edge,
**characterised in that** firstly the decorative edge and the supporting edge are glued together and following this both edges are glued jointly on to the prepared narrow side of the lightweight building board (L).

2. Method according to claim 1, **characterised in that** during the operating cycle firstly the machining in preparation for the gluing process is performed, following this or parallel thereto the supporting edge (7) and the decorative edge (6) are connected to one another by gluing and then both edges are attached jointly to the prepared narrow side.

## Revendications

1. Procédé de collage de bordures sur des panneaux légers, présentant deux couches de couverture (1, 2) à paroi mince et une couche de noyau (3) en matériau de remplissage léger, disposée entre les couches de couverture, où au moins un côté étroit du panneau léger est usiné pour la préparation du processus de collage et, suite à cela, un bord d'appui (7) et un bord de décoration (6) sont appliqués, la couche de noyau ayant, par rapport au volume, un plus faible poids que le bord d'appui,
**caractérisé en ce que**, d'abord, le bord de décoration et le bord d'appui sont collés ensemble et, suite à cela, les deux bords sont collés conjointement sur le côté étroit, ayant été préparé, du panneau léger (L).

2. Procédé selon la revendication 1, **caractérisé en ce que** dans le passage d'abord est effectué l'usinage servant à la préparation du processus de collage, suite à cela ou parallèlement à cela le bord d'appui (7) et le bord de décoration (6) sont reliés ensemble par collage et, ensuite, les deux bords sont appliqués ensemble sur le côté étroit ayant été préparé.
